# EUROPEAN PATENT APPLICATION

(11) **EP 1 033 678 A1**
(43) Date of publication of application: **06.09.2000**
(21) Application number: 99913669.0
(22) Date of filing: 15.04.1999
(51) Int. Cl.: G06T 1/00

(54) **DISK AND IMAGE PROCESSING SYSTEM USING THE DISK**

(30) Priority: 18.09.1998 JP 26520098; 04.12.1998 JP 34625098
(71) Applicant: Kabushiki Kaisha Optrom, Miyagi-ken 989-3124 (JP)
(72) Inventor: SHIGETOMI, Takashi, Kabushiki Kaisha Optrom, Sendai-shi, Miyagi-ken 989-3124 (JP); SAITO, Tetsuo, Kabushiki Kaisha Optrom, Sendai-shi, Miyagi-ken 989-3124 (JP); YOKOTA, Eiji, Kabushiki Kaisha Optrom, Sendai-shi, Miyagi-ken 989-3124 (JP); HASUDA, Kazutaka, Tokyo 113-0033 (JP)
(74) Representative: Quantin, Bruno Marie Henri
(86) International application number: JP9902000
(87) International publication number: WO0017815

(57) **Abstract**

An image processing system for performing processing of image data photographed by a digital camera and image data and audio data received on a network and automatically storing the data in a disk serving as a storage medium is provided. The system is automatically connected to a preset network and automatically connected to a preset home page. When access to and use of the home page are charged, in order to perform user authentication and an accounting process, the user authentication and the accounting process are performed by a network administrator, a home page manager, and a computer through cable communication or radio communication. An operator can display or reproduce a video image, an image, a text, music, and sound in this home page. Data processing can be performed by using processing software stored in a disk, in advance, after the processing software is started, and the data can be stored in a disk in a specific file format, or the data in the disk can be loaded.

## Description

### BACKGROUND OF THE INVENTION

### FIELD OF THE INVENTION

The present invention relates to a disk and an image processing system using the disk, and in particular, to an image processing system for performing data processing of image data photographed by a digital camera, and image data and audio data received on a network and then automatically storing the data in a disk serving as a storage medium and the disk thereof.

### DESCRIPTION OF THE RELATED ART

As one of conventional image processing systems, a digital album system for sequentially adding identifiers to image data photographed by a digital camera to store these image data in a disk is provided.

However, an image processing system for performing data processing to image data photographed by a digital camera, and image data and audio data received on a network and then automatically storing these data in a disk serving as a storage medium is not provided.

### SUMMARY OF THE INVENTION

The present invention provides an image processing system for performing data processing of image data photographed by a digital camera, and image data and audio data received on a network and then automatically storing these data in a disk serving as a storage medium.

In order to solve this problem, there is provided an image processing system including a computer having a communication device which can be connected to a network and a drive device for driving a disk serving as a storage medium, and a disk in which a boot program, digital album system software, and data processing software are stored in advance, and in which image data storage area is further provided, wherein, after the disk is inserted into the drive device, the boot program and the digital album system software stored in the disk, in advance, are started up, an operator selects a menu which is displayed by the digital album system software and a program linked to the menu is started up.

There is also provided an image processing system constituted by a computer system including a computer having a communication device which can be connected to a network and a drive device for driving a disk serving as a storage medium, and a disk in which a boot program, digital album system software, and data processing software are stored, in advance, charges being paid for these programs and software, and a preset network, and a preset charged home page, and in which data can be further stored. When the disk is inserted into the drive device, the boot program and the digital album system software stored in an optical disk in advance, start, an operator selection menu item which is displayed by the digital album system software and can be selected by an operator, and a program linked to the menu item started up. Wherein, after the system is automatically connected to a preset network, the system is automatically connected to a preset home page, when access to the home page and use of the home page are charged, user authentication and an accounting process are performed by a network administrator, a home page manager, and a computer through cable communication or radio communication to perform user authentication and an accounting process. Video image, text, music, and sound in the home page are arbitrarily displayed or reproduced by the operator. The data processing software stored in the disk, in advance, when the data processing software is charged, data processing is performed by using the data processing software after the data processing software is started up after the same accounting process as described above is performed. The data can be stored in the disk in a specific file format, or the data in the disk can be loaded. When access to the home page and use of the home page are free, a video image, an image, a text, music, and sound in the home page are arbitrarily displayed or reproduced by the operator without performing user authentication and an accounting process, and the data processing software stored in the disk in advance. When use of the data processing software is charged, after the same accounting process as described above, data processing is performed after the data processing software is started up. The data can be stored in the disk in a specific file format, or the data in the disk can be loaded.

There is also provided a disk from which data can be read and on which data can be written by a computer constituting a digital album system, wherein at least a boot program, digital album system software, and data processing software are stored. In this case, at least one of the digital album system software and the data processing software includes a data input/output program, a data storing program, an image/audio processing program, a data transmission/reception program, a data conversion program, an image display program, a user authentication program, an accounting program, a printing program, an identical-image multiple printing program, and a different-image multiple printing program.

There is also provided a disk from which data can be read and on which data can be written by a computer, wherein the disk has at least a prepaid area in which prepaid information is stored, and a service area in which service information, downloaded by using the prepaid information at a price, is stored. In this case, a program for downloading the service information on the basis of the prepaid information and a program for processing the service information are further stored. The prepaid area is a read-only area, and the service area is a writable area.

According to the present invention, there is provided an image processing system in which, after image data photographed by a digital camera and image data and audio data received on a network are subjected to data processing, these data can be automatically stored on a disk serving as a storage medium.

There is also provided a storage medium, in particular, a disk having both a storage area for prepaid information and a storage area for service information.

### BRIEF DESCRIPTION OF THE DRAWINGS

Fig. 1 is a block diagram showing a configuration of a computer used in a digital album system according to this embodiment;
Fig. 2 is a diagram showing a storage example of a compact disk according to the embodiment;
Fig. 3 is a flow chart of initial control of the embodiment;
Fig. 4 includes an upper view showing a menu display of a computer used in the digital album system according to the embodiment, and a lower view showing a sketch obtained when "30. image, sound, video thumbnail display" is selected;
Fig. 5 is a flow chart showing an operation procedure of the digital album system according to the embodiment;
Fig. 6 is a flow chart showing an operation procedure of the digital album system according to the embodiment;
Fig. 7 is a flow chart showing an operation procedure of the digital album system according to the embodiment;
Fig. 8 is a diagram showing data processing of the digital album system according to the embodiment; and
Fig. 9 is a diagram showing another data processing of the digital album system according to the embodiment.

### DETAILED DESCRIPTION OF THE PREFERRED EMBODIMENT

In order to explain the present invention in detail, an embodiment of the present invention will be described below with reference to the accompanying drawings.

### 〈Computer Constituting Digital Album System of This Embodiment〉

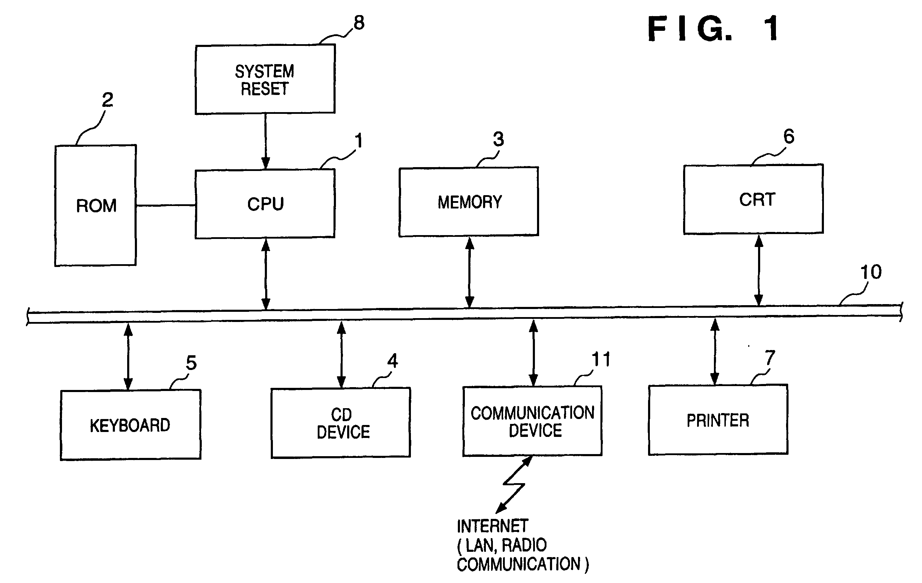

Fig. 1 is a block diagram of a system constituting a digital album system of an embodiment according to the present invention. In this embodiment, a digital album system will be described as an example of an image processing system. However, the present invention is not limited to the digital album system, and the present invention can be generally applied to image processing using a disk (to be referred to as a CD-RW hereinafter). A CD-RW serving as a medium for storing a program and data will be described as a preferred example. However, it is apparent that the present invention can be achieved by other storage media such as a floppy disk. In addition, a partial CD (CD having a read-only region and a writable region) is preferably.

In Fig. 1, the computer comprises: a central processing unit 1 (to be referred to as a CPU hereinafter) for entirely controlling the computer; a ROM 2 in which a minimum program used for causing the CPU to load a bootstrap program, a system program, and the like from a CD-RW set in a readable/writable compact disk device 4 (to be described later) is stored; a memory 3 for storing the program, processing results, or the like read from the CD-RW device 4; the CD-RW device 4; a keyboard 5; a CRT display device (to be referred to as a CRT hereinafter) 6; a printer 7 for printing a processing result or the like out; a system reset switch 8 for resetting the computer in an initial state; and a communication device 11 connected to internet or the like through cable communication or radio communication. A system bus 10 connects the various devices to each other.

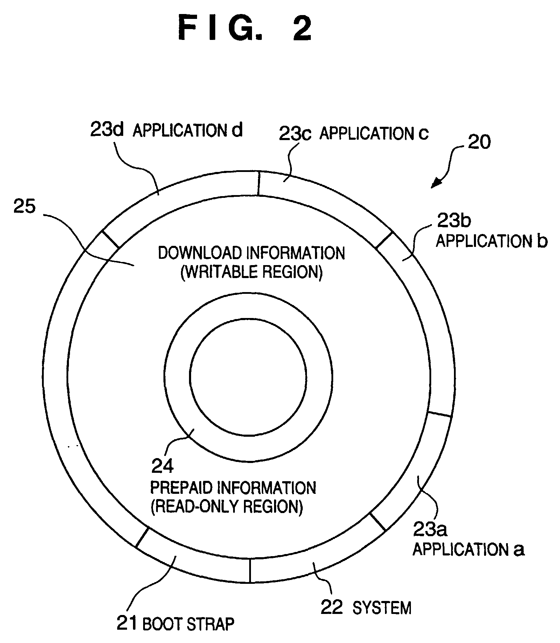

A storage example of the CD-RW according to this embodiment is shown in Fig. 2.

In Fig. 2, a CD-RW 20 is set in the CD-RW device 4. The CD-RW 20 has a bootstrap program storage region 21, a system program storage region 22, and storage regions 23a to 23d for packaged application programs a to d.

Then the partial CD is to be used, the partial CD has a read-only area 24 in which prepaid information is stored and a writable area 25 in which download information is stored. A program region may also be divided into a read-only region and a writable region depending on whether the program:region must be fixed or changed. The arrangement of the read-only region and the writable region in Fig. 2 is only an example. The arrangement of the read-only region and the writable region is not limited to the arrangement in Fig. 2.

The CD-RW may be an intelligent disk (ID) having an electronic circuit unit formed as a part of the disk. In this case, it is advantageous in that digital album system software or data processing software can be partially or entirely processed by the electronic circuit unit of the CD-RW or that more complete authentication can be realized.

Although not described in detail, the hardware, the digital album system software, and the data processing software of the digital album system of this embodiment preferably have the following functions.

### (Functional Specification)

·Selection of objective range is performed by a mouse (selection of contour of object)
·Resolution: 75 dpi or more
·Number of colors: 256 or more
   - 1. Corresponding format:: load - JPG, BMP, PIC, TIF, GIF
   write - JPG, BMP
·Other functions
   color change function
   contrast change function
   brightness change function
   sharpness change function

   □ square selection function: range addition/subtraction
   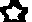 free selection function: range addition/subtraction
   transformation: image size change function: simple enlargement/reduction, resolution
   unchange/enlargement/reduction: -20 to 800%

In order to achieve these functions, in the system program storage region 22 or the application program storage region 23, a data input/output program, a data storing program, an image/audio processing program, a data transmission/reception program, a data conversion program, an image display program, a user authentication program, an accounting program, a printing program, an identical-image multiple printing program, and a different-image multiple printing program are stored. Parameters used by the programs are stored in the data region 24 or 25.

### 〈CD-RW Disk Starting Procedure of Digital Album System〉

1. After a CD-RW disk is inserted, automatic booting (boot, system) is performed to display a menu.
2. A main menu is displayed by a browser, menu item contents: internet, sample display, image, video, thumbnail display

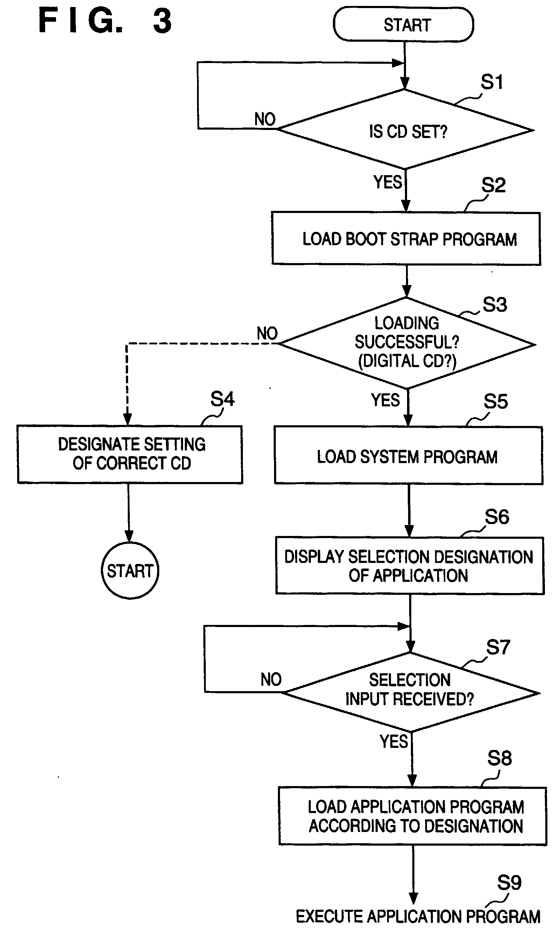

A procedure from the insertion of the CD-RW disk to the menu display will be described below with reference to the flow chart in Fig. 3.

When the power supply of the system shown in Fig. 1 is turned on, when the system reset switch 8 is pressed, or when the CD-RW is inserted into the drive device, and when the system OS has been operated, initial control shown in the flow chart of Fig. 3 is executed.

In step S1, it is monitored whether or not the CD-RW is set in the CD-RW device 4. When the CD-RW is set, the program goes to step S2, the CPU 1 accesses the bootstrap program storage region 21 in the CD-RW according to a program incorporated in the ROM 2 to load the bootstrap program.

The CPU 1 checks whether or not the bootstrap program is loaded successfully in subsequent step S3. If NO in step S3, the CPU 1 returns to step S1 again, or the CPU 1 causes the CRT 6 to light an indicator attached to the outer surface of the system and representing that "load impossible" or "digital CD-RW" (not shown) is not set, so as to inform an operator (step S4).

When loading of the bootstrap program is successful in step S3, and when the set CD-RW is a digital CD-RW, in step S5, by using the bootstrap program which has been loaded, a system program (system program includes, e.g., an operating system (OS)) is loaded. Subsequently, a process according to the loaded system program is executed.

For example, a selection screen or the like for an application to be selected is displayed on the CRT 6 in step S6, and the CPU 1 waits for a selection input in step S7. If a selection input is received in step S7, a corresponding application program is loaded from the CD-RW device 4 in step S8, and, as shown in step S9, processing is executed according to the read application program.

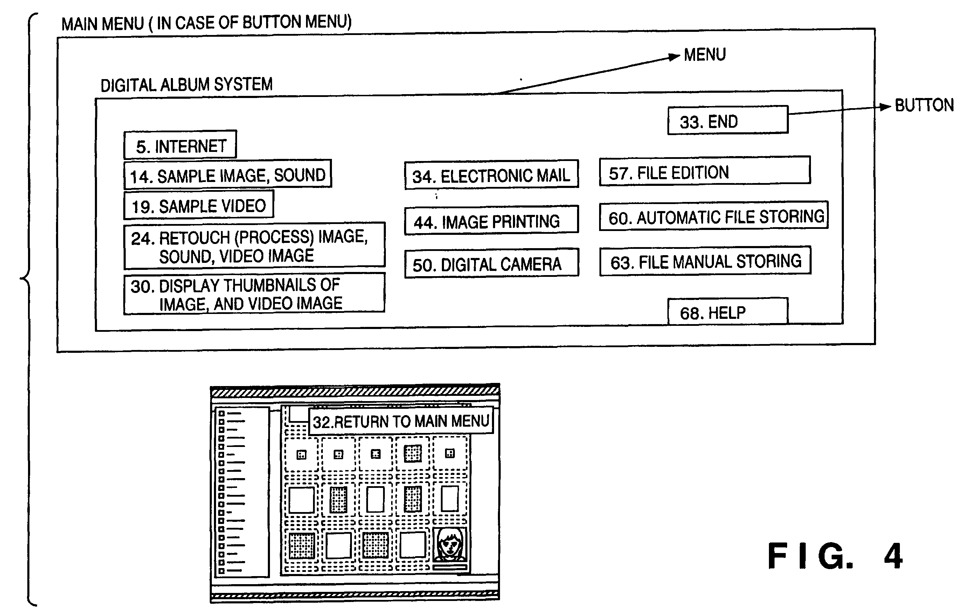

An example of a selection screen of an application is shown in Fig. 4.

### 〈Operation Procedure of Digital Album System〉

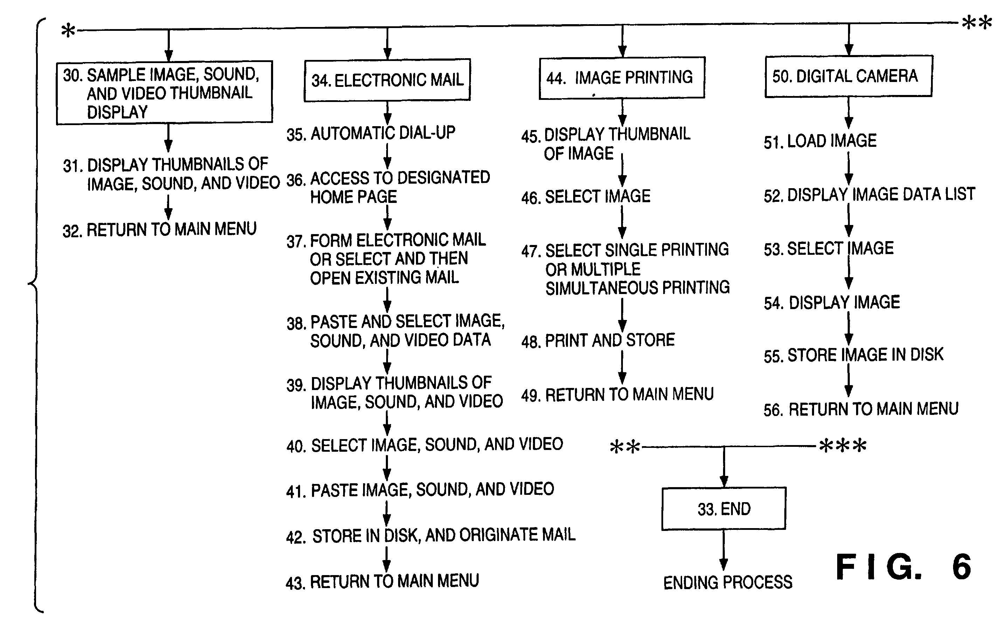

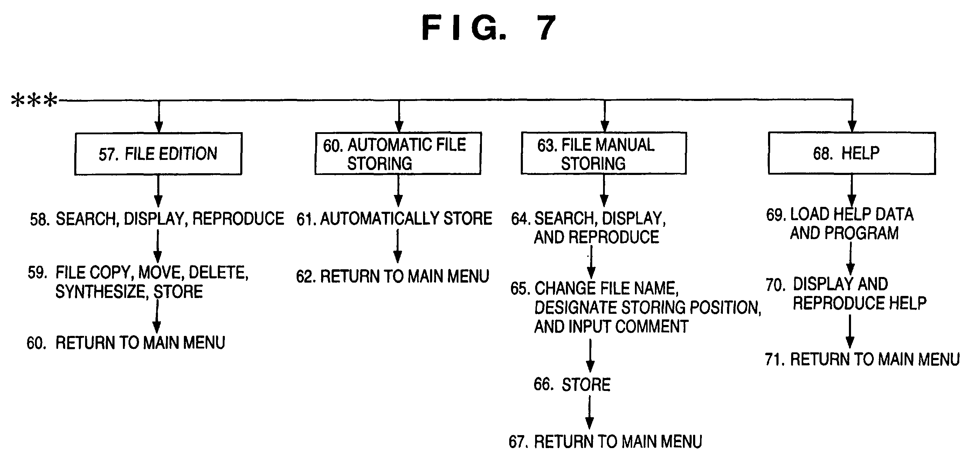

An example of an operation procedure of a digital album system will be described below with reference to Figs. 4 to 8. The advantages of the present invention is not changed even if changing an order of the operation steps.

A hierarchy of the menu of this embodiment will be described first. Although Fig. 4 shows a display of menus up to the second hierarchical level, menus having the other hierarchical levels are the same as shown in Fig. 4.

### (Example of Menu Item)

·Internet
   automatic dial-up
   access to designated HP (home page)
   ID input & check for user authentication
   download menu
   download selection determination
   accounting information check & accounting:
      function of making possible to write accounting
      data in CD-RW and transmit accounting data to
      accessed HP is required
   download to CD-RW (file formats are JPEG, BMP)
·Sample display
   image data list display
   display using photo viewer, QUICK TIME, or the like
·Image
   display image data list
   select image data on CD-RW
   load image data on CD-RW
   start retouch software
   store image data in CD-RW in JPEG, BMP formats
·Video
   the same as those in sample
·Thumbnail display
   display sample, R/W data, and summary of video
·Electronic mail
   automatic dial, access to home page
   select/paste image, sound, and video
   originate mail
·Image printing
   select and print image
   special printing (multiple printing)
·Digital camera
   load/display image
   select/store image
·File edition
   search/display/reproduce
   copy/move/delete/synthesize/store
·File automatic storing
·File manual storing
   change file name
   designate storing position
   input comment
·Help
   display of help image
·End
   (flow of internet digital album system)

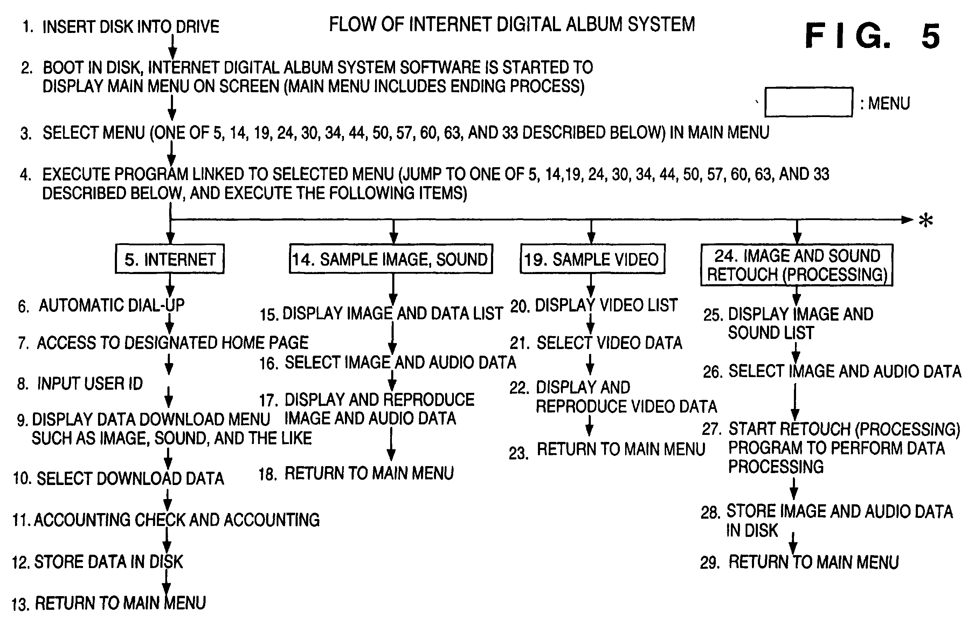

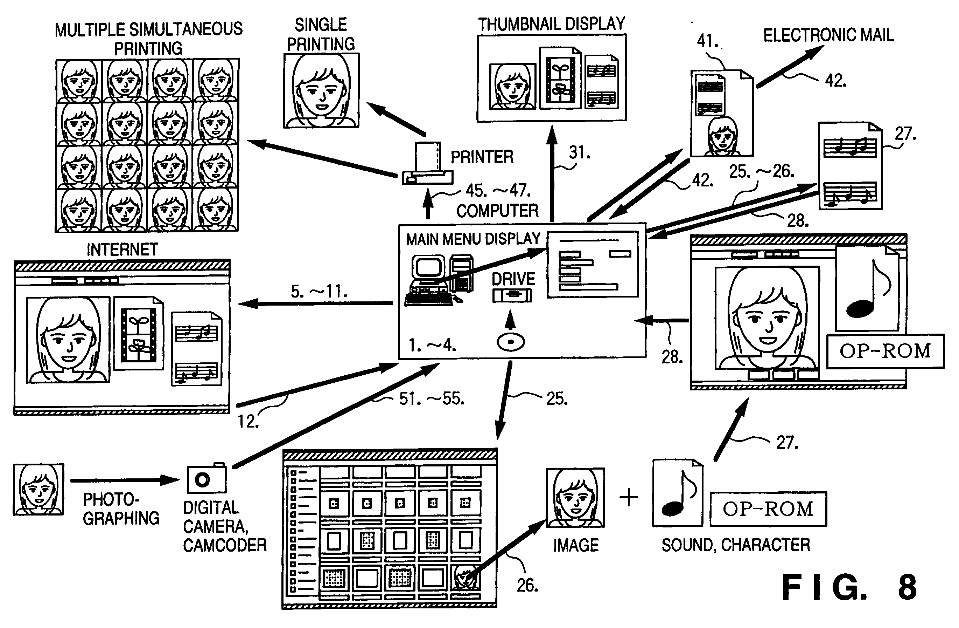

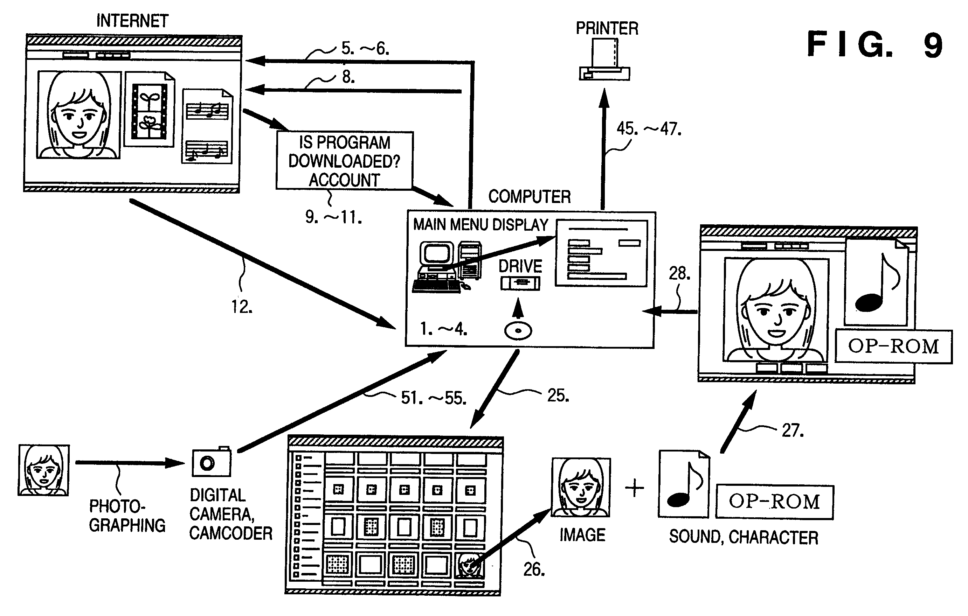

The flow of an internet digital album system will be described below. Reference numbers of respective procedures in Figs. 5 to 7 correspond to the reference numbers of data flow charts in the internet digital album systems in Figs. 8 and 9, respectively.

The procedures in Figs. 5 to 7 are as follows.
1. Insert disk into drive
2. Boot in disk, internet digital album system software is started to display main menu on screen (main menu includes ending process)
3. Select sub-menu in main menu
4. Execute program linked to selected sub-menu

### 〈5. Internet〉

6. Automatic dial-up
7. Access to designated home page
8. Input user ID
9. Display data download menu such as image, sound, and the like
10. Select download data
11. Accounting check and accounting
12. Store data in disk
13. Return to main menu

### 〈14. Sample image, sound〉

15. Display image and data list
16. Select image and audio data
17. Display and reproduce image and audio data
18. Return to main menu

### 〈19. Sample video〉

20. Display video list
21. Select video data
22. Display and reproduce video data
23. Return to main menu

### 〈24. Image and sound retouch (processing)〉

25. Display image and sound list
26. Select image and audio data
27. Start retouch (processing) program to perform data processing
28. Store image and audio data in disk
29. Return to main menu.

### 〈30. Sample image, sound, and video thumbnail display〉

31. Display thumbnails of image, sound, and video
32. Return to main menu

### 〈33. End〉

### 〈34. Electronic mail〉

35. Automatic dial-up
36. Access to designated home page
37. Form electronic mail or select and then open existing mail
38. Paste and select image, sound, and video data
39. Display thumbnails of image, sound, and video
40. Select image, sound, and video
41. Paste image, sound, and video
42. Store in disk, and originate mail
43. Return to main menu

### 〈44. Image printing〉

45. Display thumbnail of image
46. Select image
47. Select single printing or multiple simultaneous printing
48. Print and store
49. Return to main menu

### 〈50. Digital camera〉

51. Load image
52. Display image data list
53. Select image
54. Display image
55. Store image in disk
56. Return to main menu

### 〈57. File edition〉

58. Search, display, reproduce
59. File copy, move, delete, synthesize, store
60. Return to main menu

### 〈60. Automatic file storing〉

61. Automatically store
62. Return to main menu

### 〈63. File manual storing〉

64. Search, display, and reproduce
65. Change file name, designate storing position, and input comment
66. Store
67. Return to main menu

### 〈68. Help〉

69. Load help data and program
70. Display and reproduce help
71. Return to main menu

The present invention has been described above with reference to the preferable embodiment. However, the present invention is not limited to the embodiment described above, and various changes, additions, and modifications can be effected within the range described in the spirit and scope of the invention.

## Claims

1. An image processing system comprising:
a computer having a communication device which can be connected to a network and a drive device for driving a disk serving as a storage medium; and
a disk in which a boot program, digital album system software, and data processing software are stored in advance, and in which data can also be stored,
wherein after the disk is inserted into the drive device, the boot program and the digital album system software stored in the disk, in advance, are loaded and started up,
a menu is displayed by the digital album system software and a menu item can be selected by an operator, and
a program linked to the selected menu item is started up.

2. An image processing system constituted by a computer system comprising:
a computer having a communication device which can be connected to a network and a drive device for driving a disk serving as a storage medium; and
a disk in which a boot program, digital album system software, and data processing software are stored in advance, and in which data can also be stored,
wherein after the disk is inserted into the drive device of the system, the boot program and the digital album system software stored in the disk in advance start,
a menu is displayed by the digital album system software and a menu item can be selected by an operator, and
a program linked to the selected menu item is started up, and
wherein, after the system is automatically connected to a preset network and automatically connected to a preset home page,
when access to the home page and use of the home page are charged,
user authentication and an accounting process are performed with a network administrator, a home page manager, and a computer through cable communication or radio communication,
a video image, a text, music, and sound in the home page are arbitrary displayed or reproduced by the operator, and
when the data processing software stored on the disk, in advance, is charged, data processing is performed after the data processing software is started up after the same accounting process as described above is performed, the data can be stored in the disk in a specific file format, or the data in the disk can be loaded, and
when access to the home page and use of the home page are free,
a video image, an image, a text, music, and sound in the home page are displayed or reproduced by the operator without performing user authentication and an accounting process, and
when the data processing software stored on the disk, in advance, is charged, after the same accounting process as described above, data processing is performed after the data processing software is started up, data can be stored in the disk in a specific file format, or the data in the disk can be loaded.

3. An image processing system according to claim 1 or 2, further comprising a digital camera and software for transferring image data photographed by the digital camera to the computer or transferring and storing the software on the disk.

4. An image processing system according to claim 1 or 2, wherein the disk is constituted by an electronic circuit unit and a storage area, and processing is performed in the electronic circuit unit by using a program or data stored in the storage area.

5. An image processing method in a system having:
a computer having a communication device which can be connected to a network and a drive device for driving a disk serving as a storage medium; and
a disk in which a boot program, a digital album system software, and data processing software are stored in advance, and in which data can also be stored,
wherein after the disk is inserted into the drive device of the system, the boot program and the digital album system software stored in the disk, in advance, are started up,
an operator selects a menu item which is displayed by the digital album system software, and
a program linked to the selected menu item is started up.

6. An image processing method in a system having:
a computer having a communication device which can be connected to a network and a drive device for driving a disk serving as a storage medium; and
a disk in which a boot program, digital album system software, and data processing software are stored, in advance, charges for use of these programs and software, and in which data can also be stored,
wherein, after the disk is inserted into the drive device of the system, the boot program and the digital album system software stored in the disk in advance are started up,
an operator selects a menu which is displayed by the digital album system software and can be selected by an operator,
a program linked to the selected menu item is started up, and
wherein after the system is automatically connected to a preset network and automatically connected to a preset home page,
when access to the home page and use of the home page are charged,
user authentication and an accounting process are performed by a network administrator, a home page manager, and a computer through cable communication or radio communication to perform user authentication and an accounting process,
a video image, a text, music, and sound in the home page are displayed or reproduced by the operator, and
when the data processing software stored in the disk, in advance, is charged, data processing is performed after the data processing software is started and the same accounting process as described above is performed, the data can be stored on the disk in a specific file format, or the data in the disk can be loaded, and
when access to the home page and use of the home page are free,
a video image, an image, a text, music, and sound in the home page are displayed or reproduced by the operator without performing user authentication and an accounting process, and
when the data processing software stored in the disk in advance is charged, after the same accounting process as described above, data processing is performed after the data processing software is started, data can be stored in the disk in a specific file format, or the data in the disk can be loaded.

7. A disk from which data can be read and on which data can be written by a computer constituting a digital album system,
wherein at least a boots program, digital album system software, and data processing software are stored in the disk.

8. A disk according to claim 7, wherein at least one of the digital album system software and the data processing software includes a data input/output program, a data storing program, an image/audio processing program, a data transmission/reception program, a data conversion program, an image display program, a user authentication program, an accounting program, a printing program, an identical-image multiple printing program, and a different-image multiple printing program.

9. A disk from which data can be read and on which data can be written by a computer constituting a digital album system,
wherein the disk has a prepaid region in which prepaid information is stored, and a service region in which service information downloaded by using the prepaid information is stored.

10. A disk according to claim 9, wherein a program for downloading the service information on the basis of the prepaid information and a program for processing the service information are also stored.

11. A disk according to claim 9, wherein the prepaid region is a read-only region, and the service region is a writable region.

12. A disk according to any one of claims 7 to 11, wherein the disk is constituted by an electronic circuit unit and a disk unit, and processing is performed in the electronic circuit unit by using a program or data stored in the disk unit.
